# EUROPÄISCHE PATENTANMELDUNG

(11) **EP 4 682 685 A1**
(43) Veröffentlichungstag der Anmeldung: **21.01.2026**
(21) Anmeldenummer: 25189246.9
(22) Anmeldetag: 14.07.2025
(51) Int. Cl.: G06F 3/01, G06F 1/16

(54) **VERFAHREN ZUR STEUERUNG EINES COMPUTERS MITTELS EINER EYETRACKING-KAMERA, COMPUTERLESBARES SPEICHERMEDIUM UND SYSTEM**

(30) Priorität: 16.07.2024 DE 102024120208
(71) Anmelder: Curly Cube GmbH, 70180 Stuttgart (DE)
(72) Erfinder: Böger, Kolja, 40589 Düsseldorf (DE); Brehm, Tom, 70186 Stuttgart (DE)
(74) Vertreter: Meissner Bolte Partnerschaft mbB

(57) **Zusammenfassung**

Die Erfindung betrifft ein Verfahren zur Steuerung eines Computers, insbesondere eines Tabletcomputers, mittels einer Eyetracking-Kamera. Ferner betrifft die Erfindung ein entsprechendes computerlesbares Speichermedium sowie ein entsprechendes System zur Ausführung des Verfahrens.

Verfahren zur Steuerung eines Computers, insbesondere Tabletcomputer (21), mittels einer Eyetracking-Kamera (22), wobei das Verfahren die folgenden Schritte aufweist:
a) Erfassen einer ersten Blickposition (13) in einem Bildschirmbereich (10) durch die Eyetracking-Kamera (22);
b) Erzeugen eines ersten Steuerbefehls, der den Computer dazu veranlasst, ein Zeigersymbol an eine Zielposition zu steuern, die mit der ersten Blickposition (13) korrespondiert;
c) Erfassen einer zweiten Blickposition (13') in einem Aktionsbereich (11A-G) durch die Eyetracking-Kamera (22), wobei der Aktionsbereich (11A-G) außerhalb des Bildschirmbereichs (11) liegt und einem Aktionstyp zugeordnet ist; und
d) Erzeugen eines zweiten Steuerbefehls, der den Computer dazu veranlasst, eine Aktion in Abhängigkeit von der Zielposition und/oder dem Aktionstyp auszuführen.

## Beschreibung

Die Erfindung betrifft ein Verfahren zur Steuerung eines Computers, insbesondere eines Tabletcomputers, mittels einer Eyetracking-Kamera. Ferner betrifft die Erfindung ein entsprechendes computerlesbares Speichermedium sowie ein entsprechendes System zur Ausführung des Verfahrens.

Menschen, die durch umfassende motorische Einschränkungen am Sprechen und an Bewegungen gehindert sind (z.B. durch ALS oder infantile Zerebralparese), nutzten häufig Vorrichtungen zur unterstützten Kommunikation. Hierfür können insbesondere handelsübliche Tabletcomputer zum Einsatz kommen, deren Funktionalität durch Zusatzhardware und/oder spezielle Applikationen zur unterstützten Kommunikation auf die besonderen Bedürfnisse der Anwender erweitert und angepasst sind.

Insbesondere ist bekannt, herkömmliche Tabletcomputer als Kommunikationshilfen zu verwenden, wobei die Bedienung mittels Augensteuerung erfolgt. Hierzu wird ein Tabletcomputer mit einer Eyetracking-Kamera ausgestattet, welche die Blickposition des Anwenders erfasst und diese über eine Eingabeschnittstelle dem Tabletcomputers bereitstellt. Eine auf dem Tabletcomputer installierte Anwendung oder eine Komponente des Betriebssystems des Tabletcomputers selbst steuert dann ein Zeigersymbol auf der grafischen Benutzeroberfläche gemäß der erfassten Blickposition des Anwenders.

Um herkömmliche grafische Benutzeroberflächen zu bedienen, ist häufig jedoch nicht nur die Steuerung der Zeigerposition erforderlich, sondern auch das Auslösen einer Aktion, z.B. Links- oder Rechtsklick, Doppelklick, etc. an einer vorgegebenen Zeigerposition, nachdem das Zeigersymbol an die gewünschte Position gesteuert wurde.

Um diese Aktionen mittels Augensteuerung vornehmen zu können, sind Software-Applikationen bekannt, die auf dem Betriebssystem des Computers installiert werden, und welche die grafische Benutzeroberfläche des Computers mit zusätzlichen Schaltflächen und Anzeigeelementen überlagern. Um beispielsweise einen Ordner auf einer Desktop-Ansicht zu öffnen, kann der Anwender, jeweils mittels Augensteuerung, den entsprechenden Aktionstyp (z.B. Doppelklick) als eine der Zusatz-Schaltflächen auswählen, und den Cursor anschließend an die gewünschte Position steuern.

Dieser Ansatz ist jedoch nicht mit allen gängigen Computerbetriebssystemen kompatibel, da einige Betriebssysteme die Manipulation der grafischen Benutzeroberfläche durch Zusatzsoftware, beispielsweise die oben beschriebene Überlagerung, nicht zulassen.

Es ist daher Aufgabe der vorliegenden Erfindung, ein verbessertes Verfahren zur Steuerung eines Computers mittels einer Eyetracking-Kamera anzugeben. Insbesondere soll das Verfahren auch für Computerbetriebssysteme anwendbar sein, welche Eingriffe in ihre grafische Benutzeroberfläche durch Zusatzsoftware nicht zulassen, zumindest kein Überlagern der Benutzeroberfläche zur Darstellung von zusätzlichen Schaltflächen. Insbesondere soll das Verfahren ferner eine intuitive Bedienung für die Anwender ermöglichen, sodass Fehlbedienungen des Computers reduziert werden können.

Diese Aufgabe wird durch ein Verfahren gemäß Anspruch 1, ein computerlesbares Speichermedium gemäß Anspruch 12 sowie durch ein System gemäß Anspruch 13 gelöst.

Insbesondere erfolgt die Lösung der Aufgabe durch ein Verfahren zur Steuerung eines Computers, insbesondere eines Tabletcomputers, mittels einer Eyetracking-Kamera. Dabei weist der Computer eine grafische Benutzerschnittstelle auf, die durch Positionieren eines Zeigersymbols und/oder Auslösen einer Aktion bei positioniertem Zeigersymbol bedienbar ist, und das Verfahren weist die folgenden Schritte auf:
a) Erfassen einer ersten Blickposition in einem Bildschirmbereich durch die Eyetracking-Kamera;
b) Erzeugen eines ersten Steuerbefehls, der den Computer dazu veranlasst, das Zeigersymbol an eine Zielposition zu steuern, die mit der ersten Blickposition korrespondiert, und Senden des Steuerbefehls an den Computer;
c) Erfassen einer zweiten Blickposition in einem Aktionsbereich durch die Eyetracking-Kamera, wobei der Aktionsbereich außerhalb des Bildschirmbereichs liegt und einem Aktionstyp zugeordnet ist; und
d) Erzeugen eines zweiten Steuerbefehls, der den Computer dazu veranlasst, eine Aktion in Abhängigkeit von der Zielposition und/oder dem Aktionstyp auszuführen, und Senden des zweiten Steuerbefehls an den Computer.

Im Kontext der vorliegenden Erfindung kann unter einem Bildschirmbereich ein Bereich verstanden werden, in dem der Bildschirm des Computers angeordnet ist. Unter einem Aktionsbereich kann ein beliebiger Bereich im Sichtfeld des Anwenders verstanden werden, dem ein Aktionstyp (z.B. Linksklick, Rechtsklick, Doppelklick, etc.) in Bezug auf das Computerbetriebssystem zugeordnet ist. Insbesondere können Aktionsbereiche auf einem Rahmen angeordnet sein, der den Computerbildschirm umgibt. Erfindungsgemäß dienen Aktionsbereiche als virtuelle Schaltflächen, die, obwohl sie außerhalb des Bildschirmbereichs angeordnet sind, mittels Augensteuerung anwählbar sind.

Ein Aspekt des erfindungsgemäßen Verfahrens ist es, dass die vom Anwender gewünschte Eingabe (d.h. die Aktion und ggf. die zugehörige Cursorposition) dadurch erfasst wird, dass
- zunächst eine erste Blickposition in einem Bildschirmbereich erfasst wird; und danach
- eine zweite Blickposition in einem Aktionsbereich erfasst wird, der außerhalb des Bildschirmbereichs angeordnet ist.

Nach Erfassen der ersten Blickposition wird ein (erster) Steuerbefehl erzeugt und an den Computer gesendet, wobei der erste Steuerbefehl den Computer dazu veranlasst, das Zeigersymbol an die entsprechende Zielposition zu steuern. Nach Erfassen der zweiten Blickposition wird ein (zweiter) Steuerbefehl erzeugt und an den Computer gesendet, wobei der zweite Steuerbefehl den Computer dazu veranlasst, eine Aktion in Abhängigkeit von der zuvor erfassten Zielposition und/oder dem Aktionstyp des Aktionsbereichs auszuführen.

Durch das erfindungsgemäße Erfassen von Blickpositionen nicht nur im Bildschirmbereich, sondern auch in den Aktionsbereichen, kann die Interaktionsfläche für den Anwender erweitert werden. Insbesondere kann der Aktionsbereich als virtuelle Schaltfläche dienen, mit welcher der Anwender Aktionen wie Links- oder Rechtsklick an zuvor bestimmten Cursorpositionen intuitiv durch Augensteuerung auslösen kann, ohne, dass eine entsprechende Schaltfläche durch Zusatzsoftware in die grafische Benutzeroberfläche des Computerbetriebssystems integriert werden muss.

Das erfindungsgemäße Verfahren eignet sich somit insbesondere zum Einsatz bei Computern, deren Betriebssysteme weitreichende Eingriffe in die grafische Benutzerschnittstelle untersagen, solange das Betriebssystem die erzeugten ersten und zweiten Steuerbefehle akzeptiert.

Dabei ist es nicht erforderlich, dass das Verfahren von dem Computerbetriebssystem selbst ausgeführt wird, solange gewährleistet ist, dass die Blickposition von der Eyetracking-Kamera empfangen und Steuerbefehle an den Computer gesendet werden können. Beispielsweise kann das Verfahren als Teil der Firmware der Eyetracking-Kamera ausgeführt werden, insbesondere in Kombination mit Computersystemen wie z.B. iPads, die keine ständig im Hintergrund laufende (Zusatz-)Software erlauben.

Die Ausführung des erfindungsgemäßen Verfahrens als Teil der Firmware der Eyetracking-Kamera kann beinhalten, dass nicht nur grundlegende Steuersignale an den Computer gesendet werden, wie z.B. Maus-Linksklick und Maus-Rechtsklick, sondern auch komplexere Signale wie z.B. einen Touchpad-Doppeltipp mit drei simulierten Finger-Positionen, um im Computerbetriebssystem die gewünschten Aktionen, wie z.B. eine Zoom-Bedienungshilfe, auszulösen. Die modifizierte Firmware der Eyetracking-Kamera, welche das erfindungsgemäße Verfahren ausführt, kann auch eine temporär geänderte Handhabung oder Modifizierung der durch die Eyetracking-Kamera erfassten Blickposition vornehmen, wie z.B. eine Umrechnung der von der Eyetracking-Kamera erfassten Blickpositionskoordinaten für einen Zoom-Bereich.

Darüber hinaus erlaubt das erfindungsgemäße Verfahren die Steuerung des Computers auf intuitive Weise, da der Anwender für Aktionen, die an einer bestimmen Zeigerposition auszuführen sind, zunächst das Zeigersymbol an eine Zielposition steuert, und danach den Aktionstyp auswählt, der für die Zielposition ausgeführt werden soll.

In einer Ausführungsform ist der Aktionsbereich einer von mehreren Aktionsbereichen, die oberhalb und/oder unterhalb und/oder seitlich von dem Bildschirmbereich angeordnet sind.

Wie bereits erläutert, kann auf diese Weise die Interaktionsfläche für den Anwender erweitert werden, indem (zumindest teilweise) um den Bildschirmbereich herum Aktionsbereiche angeordnet sind. Insbesondere kann je ein Aktionsbereich für die folgenden Aktionstypen vorgesehen sein: Linksklick, Rechtsklick, Doppelklick, Zoom.

Alternativ oder zusätzlich zu den zuvor genannten Aktionstypen, die in Abhängigkeit von einer Zeigersymbolposition ausgeführt werden, können auch Aktionsbereiche für Aktionstypen vorgesehen sein, die unabhängig von einer Zeigersymbolposition ausgeführt werden, beispielsweise: Aufruf einer Startansicht, Öffnen einer Applikation, etc.

Darüber hinaus kann ein Aktionstyp ein Bildlauf nach oben/unten sein. Dabei kann durch die Zeigersymbolposition ein Fensterbereich spezifiziert werden, in dem der Bildlauf durchgeführt werden soll.

In einer weiteren Ausführungsform weist das Verfahren ferner die folgenden Schritte auf:
- Erzeugen eines (weiteren) Steuerbefehls, der den Computer dazu veranlasst, das Zeigersymbol an die Zielposition zu steuern und/oder dort zu halten, insbesondere unabhängig von einer aktuellen Blickposition; und
- Senden des (weiteren) Steuerbefehls, insbesondere wiederholt, insbesondere, solange die aktuelle Blickposition außerhalb des Bildschirmbereichs liegt.

Die genannten Schritte können insbesondere nach Schritt b) und vor Schritt c) ausgeführt werden.

Gemäß dieser Ausführungsform kann sichergestellt werden, dass eine (unerwünschte) Änderung der Zeigerposition unterbunden wird, die dadurch entstehen könnte, dass der Anwender seinen Blick weg von der Zielposition und hin zum Aktionsbereich bewegt.

Zu diesem Zweck sieht die Ausführungsform vor, mindestens einen weiteren Steuerbefehl zu erzeugen und an den Computer zu senden, der den Computer dazu veranlasst, die (in Schritt a) erfasste) Zielposition als Zeigersymbolposition beizubehalten, selbst wenn die aktuelle Blickposition davon abweicht. Mit anderen Worten, durch das Erzeugen und Senden des weiteren Steuerbefehls wird fingiert, dass die aktuelle Blickposition nach wie vor die in Schritt a) erfasste Blickposition ist, sodass die Zeigersymbolposition unverändert bleibt.

In einer weiteren Ausführungsform umfasst das Verfahren ferner mindestens einen der folgenden Schritte, insbesondere zwischen Schritt b) und c):
- Erfassen einer Verweildauer einer Blickposition an der Zielposition;
- Bestätigen der Blickposition, wenn die Verweildauer mindestens eine erste Zeitdauer, insbesondere 2000ms, überschreitet; und
- Hervorheben der Zielposition in der grafischen Benutzerschnittstelle, insbesondere durch Anzeigen eines grafischen Elements und/oder Steuern des Zeigersymbols zur Ausführung einer Bestätigungsbewegung, wenn die Blickposition bestätigt wurde.

Diese Ausführungsform erlaubt es dem Anwender, nachdem durch den ersten Steuerbefehl in Schritt b) das Zeigersymbol an die Zielposition gesteuert wurde, die zuvor gewählte Zielposition durch längeres Fokussieren zu bestätigen bzw. fixieren oder "einzurasten". Hierzu wird erfasst, ob die Blickposition des Anwenders für mindestens die Länge der ersten Zeitdauer an der Zielposition (bzw. einem Bereich um die Zielposition herum) verweilt ist.

Durch das Hervorheben der Zielposition in der grafischen Benutzerschnittstelle erhält der Anwender eine Rückmeldung, dass die von ihm bestätigte Blickposition von dem System erkannt worden ist.

Das Hervorheben der Zielposition in der grafischen Benutzeroberfläche kann insbesondere das Senden eines Steuerbefehls an den Computer umfassen, der den Computer dazu veranlasst, ein grafisches Element anzuzeigen und/oder das Zeigersymbol so zu steuern, dass es sich gemäß einer vorgegebenen Bestätigungsbewegung bewegt. Die Bestätigungsbewegung des Zeigersymbols kann beispielsweise eine kontinuierliche Bewegung auf einem Kreis sein, der mit einem Radius von wenigen Pixeln (z.B. 5 Pixel, bevorzugt 2 Pixel) um die Zielposition herum definiert ist. Die Bestätigungsbewegung des Zeigersymbols kann aber auch durch das Abfahren eines beliebigen anderen vorgegebenen Bewegungspfads gegeben sein, sodass das Zeigersymbol beispielsweise eine Sprungbewegung als Bestätigungsbewegung macht.

Das Ausführen einer Bestätigungsbewegung des Zeigersymbols in Reaktion auf die Bestätigung der Blickposition ist insofern besonders vorteilhaft, als dass dieser Vorgang lediglich eine Steuerung der Zeigersymbolposition voraussetzt, nicht aber Steuerbefehle zur Anzeige oder Manipulation zusätzlicher Grafikelemente. Somit eignet sich diese Option insbesondere für Computer, deren Betriebssysteme keine derartigen Manipulationen oder Steuerungen ihrer grafischen Benutzeroberfläche zulassen.

Diese Ausführungsform kann insbesondere mit der zuvor beschriebenen Ausführungsform kombiniert werden, sodass unmittelbar nach dem beschriebenen Fixieren der Zeigersymbolposition durch das Erzeugen weiterer Steuerbefehle gewährleistet wird, dass die Änderung der Blickposition - über die Bildschirmfläche hin zum Aktionsbereich außerhalb der Bildschirmfläche - keine unerwünschte Änderung der Zeigersymbolposition bewirkt.

In einer weiteren Ausführungsform umfasst Schritt d) das Erfassen einer Blickposition in einer Region des Aktionsbereichs für eine zweite Zeitdauer. Die zweite Zeitdauer ist vorzugsweise kürzer als die erste Zeitdauer, beispielsweise 200ms.

Gemäß dieser Ausführungsform wird die virtuelle Schaltfläche, die mit dem Aktionsbereich korrespondiert, durch anhaltendes Fokussieren angewählt, ähnlich wie das zuvor beschriebene Fixieren der Blickposition. Vorzugsweise ist die hierfür erforderliche Verweildauer (= zweite Verweildauer) kürzer als die Verweildauer für das Fixieren der Zeigersymbolposition (= erste Verweildauer).

Durch die im Vergleich zur Bildschirmauflösung vergleichsweise großen Aktionsbereiche erfordert bei der Augensteuerung das Anwählen des Aktionsbereichs (d.h. der virtuellen Schaltfläche) durch Blickfokussierung eine weniger hohe Präzision als das Bestimmen der Zielposition. Hält der Anwender seinen Blick somit bereits für eine kurze Verweildauer auf dem Aktionsbereich, kann dies als zuverlässiger Indikator dafür angesehen werden, dass der Anwender den Aktionsbereich tatsächlich anwählen möchte.

Indem gemäß dieser Ausführungsform unterschiedliche Verweildauern für die jeweiligen Blickfokussierungen vorgesehen werden können, kann einerseits eine hohe Eingabegeschwindigkeit erzielt werden, und andererseits Fehleingaben reduziert werden.

In einer weiteren Ausführungsform ist der Aktionstyp mindestens einer der folgenden Aktionstypen: Maus-Linksklick, Maus-Rechtsklick, Bildlauf, Zoom-In, Zoom-Out.

Auf diese Weise können die aus herkömmlichen Benutzeroberflächen, die mit einer Maus oder einem ähnlichen Eingabegerät bedienbar sind, bekannten Aktionen ausgelöst werden.

Ausgehend von den Grundtypen der oben genannten Aktionstypen sind verschiedene Aktionsmodi denkbar, die im Hinblick auf die Bedienung über Augensteuerung optimiert sind.

Der Aktionstyp, der mit einem bestimmten Aktionsbereich verknüpft ist, kann dynamisch angepasst werden. Beispielsweise können Aktionsbereiche für Bildlauf (Scrollen) bei konsekutivem Auslösen einen jeweils schnelleren bzw. weiteren Bildlauf auslösen.

Darüber hinaus können beispielsweise zwei Paare von Bildlauf-Aktionsflächen vorhanden sein, eines für einen linken Bildschirmbereich und eines für einen rechten Bildschirmbereich.

Existiert in diesem Fall nur ein scrollbarer Fensterbereich in der grafischen Benutzeroberfläche, da beispielsweise eine Anwendung über die gesamte Bildschirmfläche maximiert ist, wird der Bildlauf für diesen einen Fensterbereich durchgeführt, unabhängig davon, ob eine Schaltfläche der Bildlauf-Aktionsflächen für den linken Bildschirmbereich oder den rechten Bildschirmbereich abgewählt wird.

Existieren mehrere scrollbare Fensterbereiche, beispielsweise wenn eine Email-Anwendung aktiv ist, in der in einem linken Fensterbereich eine scrollbare Liste der Emails angezeigt wird und in einem rechten Fensterbereich eine scrollbare Darstellung der angewählten Email, so wird grundsätzlich anhand der fixierten bzw. bestätigten Zeigerposition festgelegt, in welchem der beiden Fensterbereiche der Bildlauf durchgeführt werden soll.

Der zweite Steuerbefehl kann aber auch so erzeugt werden, dass auch ohne fixierte bzw. bestätigte Zeigerposition ein Bildlauf in dem entsprechenden Bildschirmbereich erfolgt (durch Anwählen der linken Bildlauf-Aktionsflächen erfolgt ein Bildlauf in einem linken Bildschirmbereich, durch Anwählen der rechten Bildlauf-Aktionsflächen erfolgt ein Bildlauf in einem rechten Bildschirmbereich). Hierzu wird durch vorgegebene Standard-Zielpositionen eine bestätigte Zielposition simuliert.

Standard-Zielpositionen können entweder anhand absoluter Positionen auf der Bildschirmfläche vorgegeben sein, oder dynamisch bestimmt werden, insbesondere in Abhängigkeit von einer Anwendung, die aktuell auf der Bildschirmfläche angezeigt wird.

Die mit den Aktionsbereichen verknüpften Aktionstypen können abhängig von einer aktuell auf dem Computer verwendeten Anwendung sein. Beispielsweise kann ein Paar von Aktionsbereichen bei aktivem Webbrowser den Aktionstypen "Navigiere vor" und "Navigiere zurück" zugeordnet sein, und bei aktivem Mediaplayer den Aktionstypen "Lautstärke erhöhen" und "Lautstärke verringern" zugeordnet sein.

Die Zuordnung von Aktionsbereichen zu Aktionstypen kann von einem Anwender konfiguriert werden.

Ein Aktionstyp kann einer Aktion zugeordnet sein, die unabhängig von einer Cursorposition ausgeführt wird, beispielsweise:
- Zeige OS-Desktop an;
- Zeige Startmenü an;
- Zeige Windows Task-Switcher an (Alt-Tab);
- Zeige die Bildschirmtastatur für die Eingabe von Text ins Betriebssystem an;
- Zeige die Bildschirmtastatur für die direkte Kommunikation an;
- Löse eine Pause-Funktion aus.

Andererseits kann ein Aktionstyp einer Aktion zugeordnet sein, die in Abhängigkeit von einer Cursorposition auszuführen ist, beispielsweise:
- Mausklick
- Zoom in einen (kleinen) Bereich um die Zielposition, und Darstellen des Bereichs auf der gesamten Bildschirmfläche, wobei eine Umrechnung der Blickpositionskoordinaten, die von der Eyetracking-Kamera erfasst werden, in diesen Bereich ausgeführt wird;
- Kontinuierlicher Zoom; und
- Drag'n'Drop;

Der Aktionstyp "Kontinuierlicher Zoom" kann dadurch realisiert werden, dass zunächst eine Zoom-Aktionsfläche ausgelöst wird, und anschließend eine andere Aktionsfläche (Linksklick, Rechtsklick, Doppelklick, oder Drag'n'Drop-Button). Dabei wird kontinuierlich an den Zielpunkt hinein gesucht und am Ende die gewählte Aktion (z.B. Linksklick etc.) getätigt.

Der Aktionstyp Drag'n'Drop (Halten und Ziehen) kann dadurch realisiert werden, dass ein Drag'n'Drop-Modus dadurch gestartet wird, dass die Bestätigung einer Zielposition wie vorstehend beschrieben erfasst wird, dann eine Fokussierung eines Drag'n'Drop-Aktionsbereichs, und schließlich das erneute Fokussieren der zuvor bestätigten Zielposition. In dem Drag'n'Drop-Modus "simuliert" das Verfahren beispielsweise bei einer Linksklick-Aktion eine gedrückte Maustaste während der Drag'n'Drop-Bewegung. Der Drag'n'Drop-Modus kann beendet werden, wenn ein Verweilen für eine vorgegebene Zeitdauer innerhalb eines Bereichs um die neue verschobene Zielposition erfasst wird.

Während einer Drag'n'Drop-Bewegung bei simuliert gedrückter linker Maustaste, die dem aktuellen Blickpunkt kontinuierlich folgt, wird ein vorzugsweise ein Glättungsfilter auf die Koordinaten angewendet, die von der Eyetracking-Kamera erfasst werden. Hierzu kann insbesondere ein Durchschnitt der Koordinaten berechnet werden, die während eines zurückliegenden Zeitintervalls (z.B. die letzten 300 ms) erfasst worden sind, sodass die Bewegung stabilisiert werden kann. So entsteht eine gerade bzw. ebenmäßig geschwungene Bewegung des Zeigersymbols, auch wenn die ursprünglichen Blickpunkt-Koordinaten während der Bewegung zittern und springen.

Durch die oben beschriebene Anwendung eines Glättungsfilters wird auch das kontrollierte Zeichnen mit Freihandwerkzeugen in Zeichenprogrammen ermöglicht, mit beliebiger Dauer einer Strich-/Drag'n'Drop-Bewegung.

In einer weiteren Ausführungsform umfasst das Verfahren ferner ein Ermitteln, ob der Aktionstyp für die Zielposition zulässig ist, und der zweite Steuerbefehl veranlasst den Computer dazu,
- den Aktionstyp an der Zielposition auszuführen, wenn der Aktionstyp für die Zielposition zulässig ist; und
- eine modifizierte Aktion auszuführen, ggf. in Abhängigkeit von der Zielposition, falls der Aktionstyp für die Zielposition nicht zulässig ist.

Ist beispielsweise für eine bestimmte Zielposition der Aktionstyp "Linksklick" nicht verfügbar, kann der zweite Steuerbefehl so erzeugt werden, dass bei Fokussieren eines Aktionsbereichs, der mit dem Aktionstyp "Linksklick" belegt ist, eine anderer Aktionstyp ausgeführt wird (z.B. Rechtsklick), oder der Computer dazu veranlasst wird, eine entsprechende Meldung anzuzeigen.

In einer weiteren Ausführungsform ist der Aktionstyp insbesondere ein Maus Linksklick, Maus-Rechtsklick oder Maus-Doppelklick, und, wenn die Bestätigung der Zielposition erkannt wurde, in Schritt d) als die Aktion der Aktionstyp für die bestätigte Zielposition ausgeführt wird.

In einer weiteren Ausführungsform ist der Aktionstyp ein Zoom, d.h. eine Vergrö-ßerung eines (kleinen) Bereichs, der auf dem Bildschirm angezeigt wird (nachfolgend "Zoom-Bereich" genannt).

Dabei wird, wenn die Bestätigung der Zielposition erkannt wurde, in Schritt d) als die Aktion der Zoom in einen Zoom-Bereich um die bestätigte Zielposition ausgeführt. Dies umfasst das Darstellen des Zoom-Bereichs auf der gesamten Bildschirmfläche, wobei von der Eyetracking-Kamera erfasste Blickpositionskoordinaten für den Zoom-Bereich umgerechnet werden.

Gemäß dieser Ausführungsform kann eine herkömmliche Zoom-Funktionalität, die das Computerbetriebssystem als Bedienhilfe-Funktion bereitstellt, im Rahmen des erfindungsgemäßen Verfahrens zur Steuerung eines Computers genutzt werden, obwohl herkömmliche Zoom-Funktionen nicht auf die Steuerung mittels einer Eyetracking-Kamera ausgelegt sind.

Dies wird dadurch ermöglicht, dass das Verfahren über entsprechende Steuerbefehle eine Geste zur Aktivierung der Zoom-Funktionalität an den Computer sendet (z.B. simulierter Touchpad-Doppeltipp mit drei simulierten Finger-Positionen, die basierend auf einer aktuellen Blickposition festgelegt werden). Dies veranlasst den Computer, den Zoom-Bereich auf der gesamten Bildschirmfläche darzustellen. In diesem Zustand wird eine Koordinatentransformation durchgeführt, bei der die von der Eyetracking-Kamera erfasste Blickposition, die sich auf das Koordinatensystem des vergrößerten Zoom-Bereichs bezieht, in ein Koordinatensystem der Bildschirmfläche umgerechnet wird. Diese Koordinatentransformation ermöglicht es, dass der Anwender in dem vergrößerten Zoom-Bereich navigieren kann.

Das Erzeugen und Senden der Aktivierungsgeste sowie die Koordinatentransformation werden dabei als Teil des vorgeschlagenen Verfahrens ausgeführt, das insbesondere als Teil einer auf der Eyetracking-Kamera ausgeführten Firmware ausgeführt werden kann.

In einer weiteren Ausführungsform ist der Aktionstyp ein Bildlauf, und in Schritt d) wird als die Aktion der Bildlauf für einen Fensterbereich ausgeführt, der durch eine vorgegebene Standard-Zielposition bestimmt wird.

In einer weiteren Ausführungsform wird in Schritt d) die Aktion unabhängig von der Zielposition ausgeführt.

In einer weiteren Ausführungsform umfasst das Verfahren ferner ein Ansteuern einer Statusanzeige, insbesondere eines LED-Elements, die dem Aktionsbereich zugeordnet ist, und/oder ein Ansteuern des Computers zur Hervorhebung einer Aktionsbereichs-Region auf dem Bildschirmbereich, die dem Aktionsbereich zugeordnet ist, und zwar
a) sobald eine Blickposition in dem Aktionsbereich erfasst wurde; und/oder
b) sobald der zweite Steuerbefehl an den Computer gesendet wurde.

Insbesondere kann, bei einer Vielzahl von Aktionsbereichen, jedem Aktionsbereich eine eigene Statusanzeige zugeordnet sein. Die Statusanzeige kann beispielsweise den jeweiligen Aktionsbereich als rechteckigen oder ellipsenförmigen Rahmen einfassen.

Gemäß dieser Ausführungsform erhält der Anwender eine optische Rückmeldung über den Eingabevorgang. Gemäß obiger Option a) wird die Statusanzeige aktiviert, sobald eine Blickposition in dem Aktionsbereich erfasst wurde, d.h. zu Beginn des Ablaufs der zweiten Zeitdauer. Alternativ oder zusätzlich kann gemäß Option b) die Statusanzeige angesteuert werden, sobald der zweite Steuerbefehl an den Computer gesendet wurde, d.h. im Wesentlichen nach Ablauf der zweiten Zeitdauer. Beide Optionen, insbesondere in Kombination, erleichtern dem Anwender, den Fortschritt seines Bedienvorgangs zu verfolgen, sodass das Risiko von Fehlbedienungen verhindert werden kann.

Das Ansteuern der Statusanzeige kann beispielsweise ein Aufleuchten und/oder ein Aufblitzen der Statusanzeige verursachen.

Ferner kann die Statusanzeige so angesteuert werden, dass sie kontinuierlich die Helligkeit steigert oder sich in Form einer wachsenden Fortschrittsanzeige (Progress Bar) darstellt, um den Fortschritt der zweiten Verweildauer proportional darzustellen.

Eine Anordnung der Statusanzeige (z.B. LED) im Bereich des ihr zugeordneten Aktionsbereichs ist dabei besonders vorteilhaft, da die Statusanzeige somit zu dem Zeitpunkt, in dem der Anwender seinen Blick auf den Aktionsbereich richtet (d.h. die virtuelle Schaltfläche anwählt), unmittelbar im Blickfeld des Anwenders liegt. Der Anwender muss somit seinen Blick nicht von dem Aktionsbereich weg und hin zu einer anderen Position bewegen, um festzustellen, ob der Bedienvorgang erfolgreich war.

Alternativ oder zusätzlich zum Ansteuern der Statusanzeige kann eine akustische Rückmeldung durch Ansteuern einer Audioausgabeschnittstelle, eine Rückmeldung durch Vibration, etc. erzeugt werden, um den Anwender über das Ereignis zu informieren.

Alternativ oder zusätzlich zum Ansteuern eines (externen) Anzeigeelements kann der Computer selbst angesteuert werden, sodass eine Aktionsbereichs-Region auf dem Bildschirmbereich angesteuert wird, die dem Aktionsbereich zugeordnet ist.

Diese Variante setzt keine physischen Statusanzeigen, beispielsweise im Rahmen des Bildschirms voraus, sondern nutzt den Computerbildschirm selbst als Anzeigefläche.

Insbesondere kann die Aktionsbereichs-Region auf der Bildschirmfläche im Randbereich der Bildschirmfläche angeordnet sein, sodass er an den entsprechenden Aktionsbereich angrenzt. Die Aktionsbereichs-Region auf der Bildschirmfläche kann beispielsweise im Wesentlichen so groß wie der entsprechende Aktionsbereich sein. Es ist vorteilhaft, die Aktionsbereichs-Region auf dem Bildschirmbereich in unmittelbarer Nähe zum Aktionsbereich zu wählen, da der Anwender die visuelle Hervorhebung auf dem Bildschirm so während des Fokussierens der Aktionsfläche wahrnehmen kann.

Die Aufgabe wird ferner durch ein computerlesbares Speichermedium gelöst. Das computerlesbare Speichermedium enthält Instruktionen, die mindestens einen Prozessor dazu veranlassen, das Verfahren wie vorstehend beschrieben zu implementieren, wenn die Instruktionen durch den mindestens einen Prozessor ausgeführt werden.

Für das computerlesbare Speichermedium ergeben sich ähnliche Vorteile und technische Wirkungen, wie sie in Verbindung mit dem erfindungsgemäßen Verfahren beschrieben wurden.

Die Aufgabe wird ferner durch ein System gelöst, welches das Folgende aufweist:
- einen Computer mit Bildschirm, insbesondere Tabletcomputer;
- eine Eyetracking-Kamera; und
- eine Halterung, in und/oder an dem der Bildschirm und die Eyetracking-Kamera angeordnet sind, und an der ein oder mehrere Aktionsbereiche angeordnet sind,
wobei das System dazu ausgebildet ist, das Verfahren wie vorstehend beschrieben auszuführen.

Die Halterung kann somit einerseits dem Zweck dienen, die Eyetracking-Kamera an dem Computer zu befestigen. Andererseits kann die Halterung den Zweck erfüllen, die Fläche für die Aktionsbereiche bereitzustellen, d.h. die virtuellen Schaltflächen außerhalb des Bildschirmbereichs. Zu diesem Zweck kann die Halterung beispielsweise einen Rahmen aufweisen, der insbesondere 2 bis 8 cm breit sein und den Bildschirm des Computers umschließen kann. Auf dem Rahmen können die Aktionsbereiche angeordnet sein und optisch abgegrenzt sein, insbesondere durch entsprechende Markierungen, andere Farben, etc.

Die Halterung kann auf ihrer Rückseite einen Aufnahmebereich für eine Befestigung aufweisen, um das System an einem Rollstuhl, Tisch oder einem Ständer befestigen zu können. Dies erleichtert die Anordnung des Systems insbesondere für Anwender, die das System in einem Rollstuhl sitzend nutzen.

Für das System ergeben sich ähnliche Vorteile und technische Wirkungen, wie sie in Verbindung mit dem erfindungsgemäßen Verfahren beschrieben wurden.

In einer Ausführungsform des Systems ist die Eyetracking-Kamera dazu ausgebildet ist, das Verfahren wie vorstehend beschrieben auszuführen. Insbesondere kann eine auf der Eyetracking-Kamera ausgeführte Firmware hierzu entsprechend modifiziert sein.

Dies hat den technischen Vorteil, dass weder Zusatzsoftware auf dem Betriebssystem des Computers installiert werden muss, um das erfindungsgemäße Verfahren auszuführen, noch eine zusätzliche Rechenvorrichtung zu diesem Zweck bereitgestellt werden muss. Stattdessen wird die vorhandene Eyetracking-Kamera als Rechenvorrichtung genutzt, welche die entsprechenden Steuerbefehle an den Computer sendet. Somit ist keine Installation von Zusatzsoftware auf dem Computer erforderlich.

In einer Ausführungsform weist die Halterung eine oder mehrere Statusanzeigen, insbesondere LED-Elemente auf, die jeweils einem Aktionsbereich zugeordnet sind.

Die eine oder mehreren Statusanzeigen der Halterung können mit dem TabletComputer verbunden sein, insbesondere per Kabel oder Bluetooth, und von einer auf dem Tabletcomputer installierten Software gesteuert werden. Alternativ oder zusätzlich können Statusanzeigen mit der Eyetracking-Kamera verbunden sein, insbesondere per Kabel oder Bluetooth, und von der Firmware der Eyetracking-Kamera gesteuert werden.

Wie bereits erläutert, kann das Ansteuern der Statusanzeigen, wie es im Zusammenhang mit dem Verfahren beschrieben wurde, es dem Anwender erleichtern, den Fortschritt des Eingabevorgangs zu verfolgen.

An dieser Stelle sei darauf hingewiesen, dass die Merkmale und die damit jeweils erzielbaren Vorteile, die in Bezug auf das erfindungsgemäße Verfahren beschrieben wurden, auf das erfindungsgemäße System und das computerlesbare Speichermedium anwendbar bzw. übertragbar sind und umgekehrt. Konkret sind die Komponenten des Systems im Kontext der vorliegenden Beschreibung der Erfindung dazu ausgebildet, die erfindungsgemäßen Verfahrensschritte durchzuführen. Ebenso sind die Funktionen der oben beschriebenen Komponenten des erfindungsgemäßen Systems als Verfahrensschritte des erfindungsgemäßen Verfahrens anwendbar.

Nachfolgend wird die Erfindung anhand von Ausführungsbeispielen beschrieben, die anhand der Abbildungen näher erläutert werden. Hierbei zeigen:
- Fig. 1: ein erfindungsgemäßes System gemäß einem Ausführungsbeispiel; und
- Fig. 2a-e: einen Eingabevorgang gemäß dem erfindungsgemäßen Verfahren gemäß einem weiteren Ausführungsbeispiel;
- Fig. 3a-b: einen Eingabevorgang unter Verwendung von Bildlauf-Schaltflächen gemäß einem weiteren Ausführungsbeispiel;
- Fig. 4: Aktionsbereichs-Regionen auf der Bildschirmfläche zur visuellen Hervorhebung gemäß einem weiteren Ausführungsbeispiel des erfindungsgemäßen Verfahrens.

In der nachfolgenden Beschreibung werden für gleiche und gleich wirkende Teile dieselben Bezugsziffern verwendet.

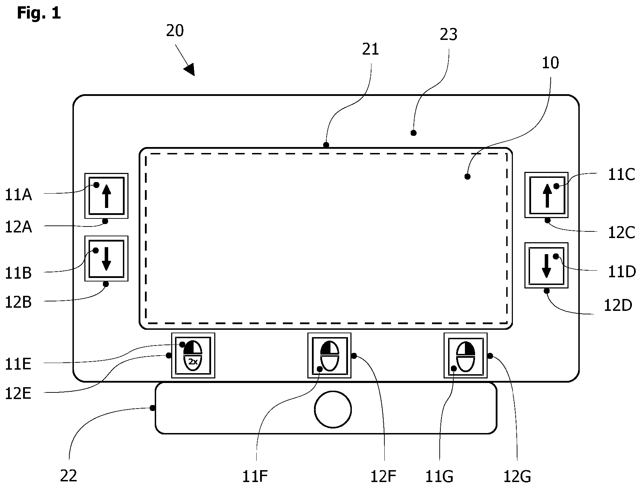

Figur 1 zeigt ein erfindungsgemäßes System 20, welches den Tabletcomputer 21, die Eyetracking-Kamera 22 und die Halterung 23 aufweist.

Der Tabletcomputer 21 ist so in der Halterung 23 angeordnet, dass ein Bildschirmbereich 10 des Tabletcomputers 21 von der Halterung 23 von oben, unten, links und rechts umschlossen ist. Auch die Eyetracking-Kamera 22 ist an einem unteren Bereich der Halterung 23 angeordnet und so ausgerichtet, dass sie die Blickposition eines Anwenders erfassen kann, der auf den Bildschirmbereich 10 schaut.

Die Eyetracking-Kamera 22 ist kommunikativ mit dem Tabletcomputer 21 verbunden, beispielsweise über eine USB-C-Schnittstelle oder drahtlos. Ferner ist eine in der Eyetracking-Kamera 22 integrierte Recheneinheit dazu ausgebildet, das erfindungsgemäße Verfahren auszuführen, d.h. insbesondere die Blickposition des Anwenders zu erfassen und entsprechende Steuerbefehle an den Tabletcomputer 21 zu senden.

Auf dem Rahmen der Halterung 23, der den Bildschirmbereich 10 umgibt, sind mehrere Aktionsbereiche 11A-G angeordnet. Die Abgrenzungen der Aktionsbereiche 11A-G auf der Halterung 23 sind für den Anwender optisch erkennbar.

Die Aktionsbereiche 11A-G fungieren erfindungsgemäß als virtuelle Schaltflächen für jeweilige damit verknüpfte Aktionstypen, die der Anwender mittels Augensteuerung anwählen kann und die durch entsprechende Piktogramme oder Beschriftungen erkennbar sind. Konkret sind den Aktionsbereichen 11A-G des hier beschriebenen Ausführungsbeispiels die folgenden Aktionnstypen zugeordnet:

| | |
|---|---|
| Aktionsbereich 11A: | erster Bildlauf aufwärts |
| Aktionsbereich 11B: | erster Bildlauf abwärts |
| Aktionsbereich 11C: | zweiter Bildlauf aufwärts |
| Aktionsbereich 11D: | zweiter Bildlauf abwärts |
| Aktionsbereich 11E: | Doppelklick links |
| Aktionsbereich 11F: | Linksklick |
| Aktionsbereich 11G: | Rechtsklick |

Dem ersten Bildlauf (Aktionsbereiche 11A-11B) kann beispielsweise ein scrollbarer Bereich zugeordnet sein, der im linken Bereich einer grafischen Benutzeroberfläche angezeigt wird, während dem zweiten Bildlauf (Aktionsbereiche 11C-11D) ein scrollbarer Bereich zugeordnet sein kann, der im rechten Bereich der grafischen Benutzeroberfläche angezeigt wird. Die mit den Aktionsbereichen 11A-11B und 11C-11D verknüpften Aktionen können dabei dynamisch so erzeugt werden, dass wiederholtes Betätigen derselben Bildlauf-Aktionsfläche einen Bildlauf über eine größere Distanz auslöst (d.h. einen "schnelleren" Bildlauf des jeweiligen scrollbaren Bereichs durchführt).

Jeder der Aktionsbereiche 11A bis 11G ist von einem jeweiligen LED-Element 12A bis 12G umgeben, welches gemäß dem erfindungsgemäßen Verfahren während des Eingabevorgangs angesteuert wird. Beispielsweise kann das LED-Element 12F so gesteuert werden, dass es aufleuchtet, sobald und solange die Eyetracking-Kamera 22 detektiert, dass die Blickposition des Anwenders in dem Aktionsbereich 11F liegt, und aufblitzt, sobald an (zweiter) Steuerbefehl erzeugt wurde, der den Tabletcomputer 21 dazu veranlasst, die mit dem Aktionsbereich 12F verknüpfte Aktion (Linksklick) auszuführen.

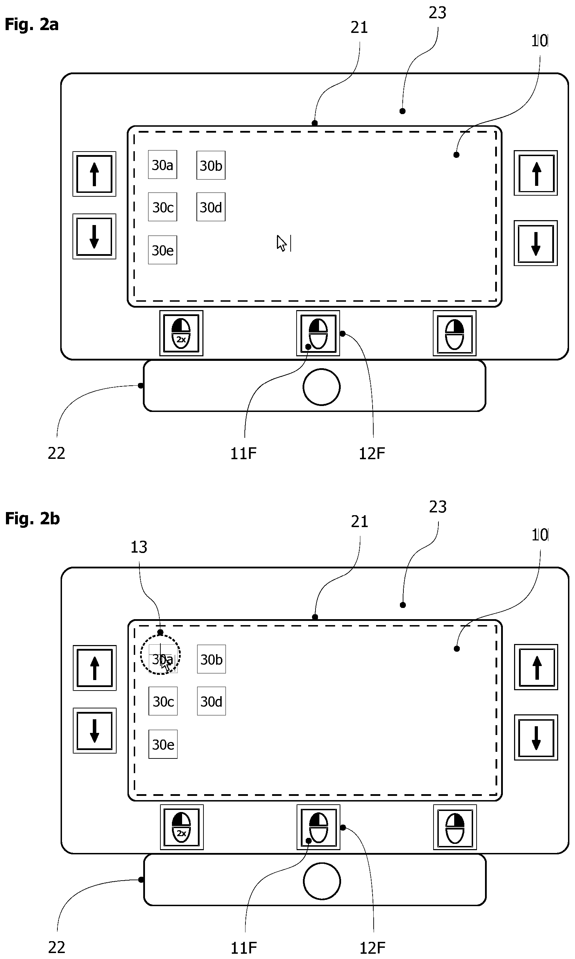

Die Figuren 2a bis 2e zeigen einen Eingabevorgang gemäß dem erfindungsgemäßen Verfahren, insbesondere unter Verwendung des in Figur 1 dargestellten Systems, gemäß einem weiteren Ausführungsbeispiel.

Hierbei zeigt Figur 2a einen Ausgangszustand, in dem auf dem Bildschirm des Tabletcomputers 21 eine grafische Benutzeroberfläche mit mehreren Ordnern 30a bis 30e dargestellt ist. Um einen der Ordner 30a bis 30e zu öffnen, ist es erforderlich, das Zeigersymbol in den Bereich des jeweiligen Ordnersymbols zu bewegen, und an dieser Zeigerposition einen Linksklick auszulösen.

Figur 2b zeigt einen Zustand, nachdem die Eyetracking-Kamera 22 erfasst hat, dass die Blickposition 13 des Anwenders im Bereich des Ordners 30a auf dem Bildschirmbereich 10 liegt, und einen (ersten) Steuerbefehl erzeugt und an den Tabletcomputer 21 gesendet hat. Wie in Figur 2b dargestellt, hat der erste Steuerbefehl den Tabletcomputer 21 dazu veranlasst, das Zeigersymbol an die Zielposition zu steuern, d.h. die Blickposition 13 bzw. den Bereich des Ordners 30a.

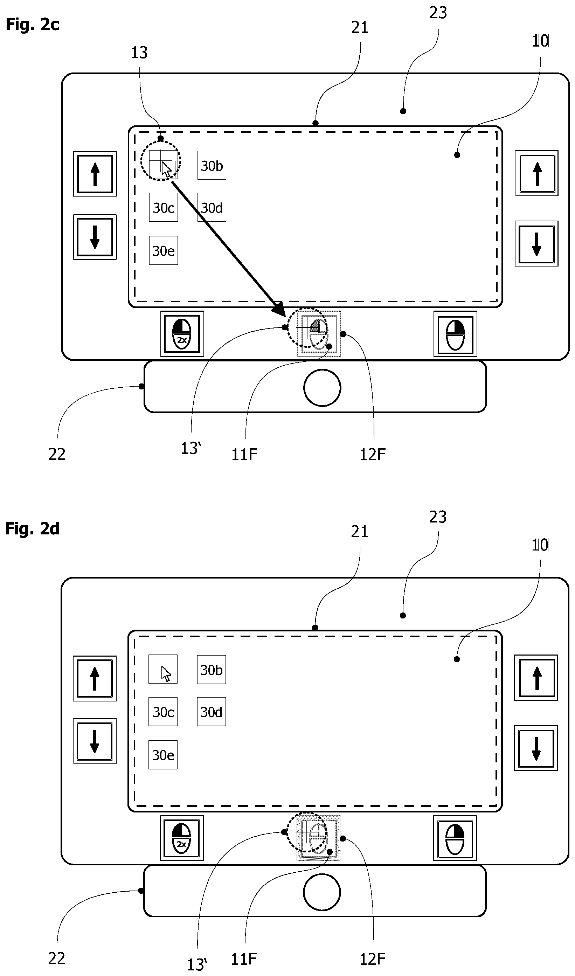

Zu diesem Zeitpunkt wird erfasst, ob der Anwender seine Blickposition für mindestens die erste Zeitdauer (z.B. 2000ms) im Bereich der Blickposition 13 beibehält. In diesem Fall wird die Zeigersymbolposition fixiert und der Eingabevorgang wie im Zusammenhang mit Figuren 2c bis 2e beschrieben fortgesetzt. Andernfalls wird die Zeigersymbolposition gemäß der erfassten Blickposition aktualisiert.

Figur 2c zeigt einen Folgezustand, unmittelbar nachdem die Zeigersymbolposition im Bereich des Ordners 30a fixiert wurde, wie im Zusammenhang mit Figur 2b beschrieben. Obwohl der Anwender in diesem Zustand seinen Blick von der (ersten) Blickposition 13 hin zur (zweiten) Blickposition 13' im Bereich des Aktionsbereichs 11F richtet (wie durch den Pfeil zwischen den Blickpositionen 13 und 13' dargestellt) und sein Blick dabei über andere Bereiche des Bildschirmbereichs 10 wandert, bleibt die Zeigersymbolposition unverändert. Dies wird erfindungsgemäß dadurch gewährleistet, dass ausgehend von dem in Figur 2b gezeigten Zustand ein oder mehrere weitere Steuerbefehle erzeugt und an den Tabletcomputer 21 gesendet werden, welche diesen dazu veranlassen, das Zeigersymbol unabhängig von der aktuellen Blickposition an dem vorherigen Ort zu halten.

Wie in Figur 2d dargestellt, leuchtet das um den Aktionsbereich 11F angeordnete LED-Element 12F auf, sobald die Blickposition 13' im Bereich des Aktionsbereichs 11F erfasst wurde. Ab diesem Zeitpunkt beginnt eine weitere Zeitmessung, um zu ermitteln, ob der Anwender seinen Blick für mindestens die zweite Zeitdauer (z.B. 500 ms), im Aktionsbereich 11F hält.

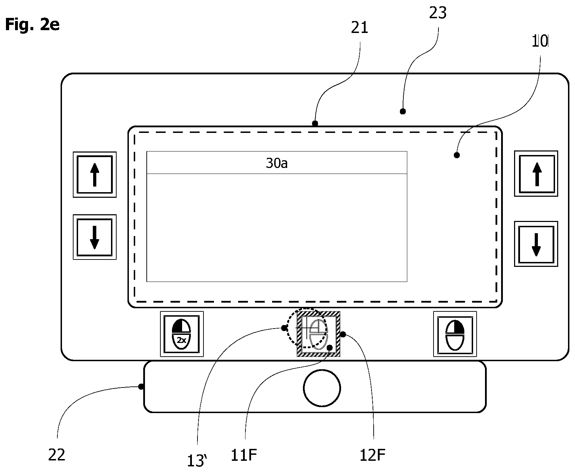

Figur 2e zeigt schließlich den Zustand, nachdem der Anwender ausgehend von dem in Figur 2d gezeigten Zustand seinen Blick für die zweite Zeitdauer auf dem Aktionsbereich 12F gehalten hat. Erfindungsgemäß wurde ein zweiter Steuerbefehl erzeugt und an den Tabletcomputer 21 gesendet, der diesen dazu veranlasst, einen Linksklick in Bezug auf die zuvor festgelegte Zeigersymbolposition (d.h. im Bereich des Ordners 30a) auszuführen. Um dem Anwender das erfolgreiche Anwählen des Aktionsbereichs 11F anzuzeigen, wird das LED-Element 12F so angesteuert, dass es einmalig aufblitzt, unmittelbar, nachdem die zweite Zeitdauer abgelaufen ist. Der so ausgelöste Linksklick in Bezug auf die zuvor fixierte Zeigersymbolposition bewirkt, dass in der dargestellten grafischen Oberfläche der Ordner 30a geöffnet wird (vgl. Bildschirmbereich 10 der Figur 2e).

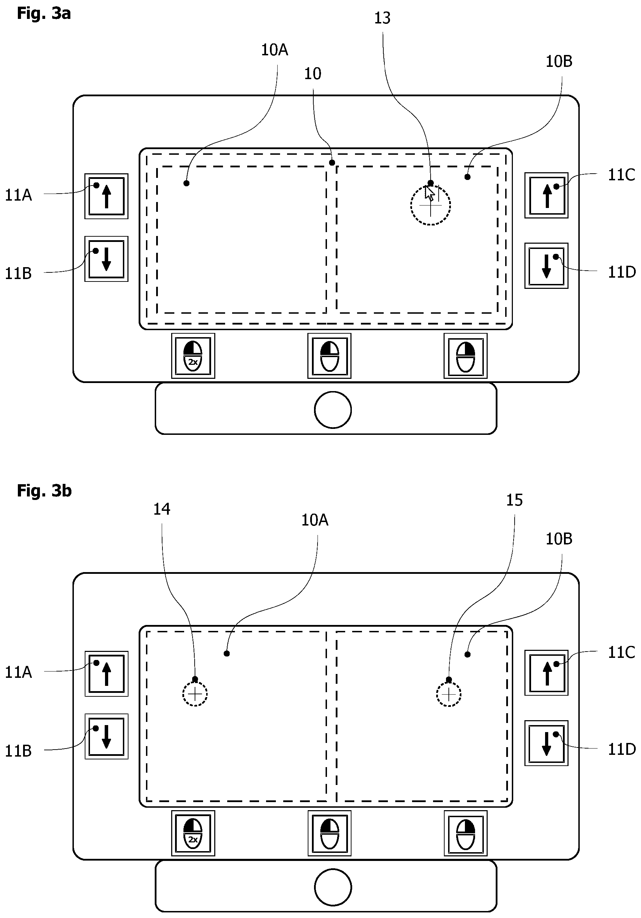

Figur 3a-b zeigt einen Eingabevorgang unter Verwendung von Bildlauf-Schaltflächen gemäß einem weiteren Ausführungsbeispiel.

In dem gezeigten Ausführungsbeispiel wird auf dem Bildschirmbereich 10 des Computers eine Anwendung mit zwei Bildschirmbereichen 10A und 10B angezeigt, die separat gescrollt werden können. Wie in den Ausführungsbeispielen der Figuren 1 und 2 weist die gezeigte Vorrichtung zwei Paare von Bildlaufschaltflächen 11A, 11B und 11C, 11D auf, welche zustandsabhängig die nachfolgend beschriebene Funktionalität besitzen.

Figur 3a zeigt einen Zustand, bei dem die Blickposition 13 durch anhaltendes Fokussieren bestätigt worden ist, und das Zeigersymbol an die entsprechende Zielposition im rechten Fensterbereich 10B gesteuert worden ist. In einem solchen Zustand sind sowohl die Aktionsbereiche 11A-B für den ersten Bildlauf, als auch für die Aktionsbereiche 11C-11D für den zweiten Bildlauf so konfiguriert, dass ein Bildlauf in dem Fensterbereich 10B durchgeführt wird, in dem sich die bestätigte Zielposition befindet.

Figur 3b zeigt dagegen einen Zustand, bei dem das Zeigersymbol zwar auf der Bildschirmfläche angeordnet ist, aber keine Bestätigung der Blick- bzw. Zielposition vorliegt. Hier wird die Funktionalität der Bildlauf-Aktionsbereiche 11A-B bzw.

11C-D anstatt der (nicht bestätigten Zeigerposition) durch die jeweiligen Standard-Zielpositionen 14, 15 bestimmt.

Konkret wird bei Anwahl der Aktionsbereiche 11A-B für den ersten Bildlauf der zweite Steuerbefehl derart erzeugt, dass ein Bildlauf bezüglich der Standard-Zielposition 14 durchgeführt wird, d.h. ein Bildlauf im linken Bildschirmbereich 10A.

Entsprechend wird bei Anwahl der Aktionsbereiche 11C-D für den zweiten Bildlauf der zweite Steuerbefehl derart erzeugt, dass ein Bildlauf bezüglich der Standard-Zielposition 15 durchgeführt wird, d.h. ein Bildlauf im rechten Bildschirmbereich 10B.

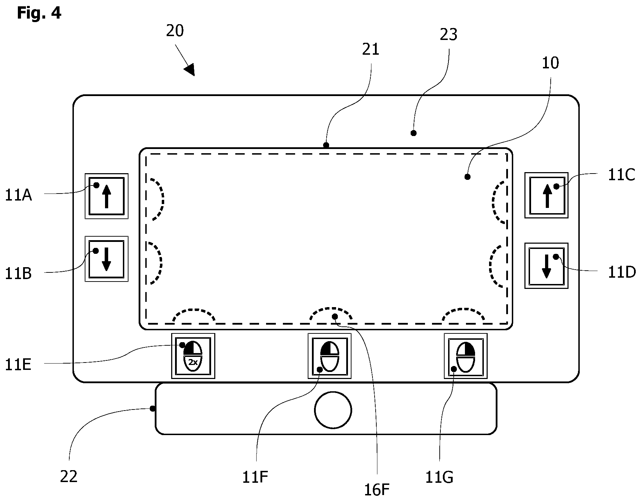

Figur 4 zeigt Aktionsbereichs-Regionen auf der Bildschirmfläche zur visuellen Hervorhebung gemäß einem weiteren Ausführungsbeispiel des erfindungsgemäßen Verfahrens. Die Aktionsbereichs-Regionen dienen zur visuellen Hervorhebung einer angewählten Aktionsfläche und erfüllen somit eine ähnliche Funktion wie die LED-Elemente 12A-G im Ausführungsbeispiel der Figur 1, nämlich die Visualisierung des Eingabefortschritts für den Anwender.

Insbesondere ist dem Aktionsbereich 11F (Links-Mausklick) die Aktionsbereichs-Region 16F zugeordnet. Die Aktionsbereichs-Region 16F ist im Randbereich des Bildschirmbereichs 10 angeordnet, weist eine halbellipsenartige Form und eine Breite auf, die im Wesentlichen die Breite des Aktionsbereichs 11F entspricht.

Gemäß diesem Ausführungsbeispiel steuert das Verfahren den Computer so, dass die Aktionsbereichs-Region 16F in der grafischen Benutzeroberfläche visuell hervorgehoben wird, wenn die Eyetracking-Kamera erfasst, dass der Anwender den Aktionsbereich 11F fokussiert. Das visuelle Hervorheben kann insbesondere ein progressives Aufleuchten der Aktionsbereichs-Region 16F umfassen, während der Anwender die Aktionsfläche 11F fokussiert und diese noch nicht ausgelöst ist (d.h. während Ablauf der Mindestverweildauer), und/oder ein kurzes Aufleuchten, wenn die Aktionsfläche 11F ausgelöst wurde (d.h. nach Ablauf der Mindestverweildauer).

Wie in Figur 4 dargestellt, sind den Aktionsbereichen 11A-E und 11G ebenfalls entsprechende halbellipsenförmige Aktionsbereichs-Regionen (ohne Bezugszeichen) zugeordnet. Diese werden in Verbindung mit den entsprechenden Aktionsbereichen 11A-E und 11G so angesteuert, wie es in Verbindung mit dem Aktionsbereich 11F und der Aktionsbereichs-Region 16F beschrieben wurde.

Die zuvor beschriebenen Ausführungsbeispiele sind lediglich beispielhaft zu verstehen, und es sind verschiedenste alternative Ausgestaltungen möglich, ohne vom Wesen der Erfindung abzuweichen. Beispielhaft wird auf die folgenden Aspekte hingewiesen:
Zwar ist in dem Ausführungsbeispiel der Figur 1 ein System 20 mit einer Halterung 23 beschrieben, welches den Tabletcomputer 21 an allen vier Seiten (oben, unten, rechts und links) umschließt. Es sind aber auch Halterungen denkbar, die einen Bildschirm nur an einer, zwei oder drei Seiten umschließen.

Es versteht sich ferner von selbst, dass statt der in Figur 1 dargestellten Aktionsbereiche 11A-11G zusätzliche oder weniger Aktionsbereiche angeordnet sein können, ggf. in anderer Anordnung auf der Halterung, sowie Aktionsbereiche für andere Aktionstypen, die ggf. auch unabhängig von einer Zeigerposition ausgeführt werden können (z.B. Öffnen einer Anwendung).

In dem in Figur 1 beschriebenen System ist die Eyetracking-Kamera als externe Kamera beschrieben, die mit dem Tabletcomputer verbunden ist. Es kann sich aber stattdessen auch um eine in den Tabletcomputer integrierte Kamera handeln.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 10: Bildschirmbereich
- 11A: Aktionsbereich (erster Bildlauf aufwärts)
- 11B: Aktionsbereich (erster Bildlauf abwärts)
- 11C: Aktionsbereich (zweiter Bildlauf aufwärts)
- 11D: Aktionsbereich (zweiter Bildlauf abwärts)
- 11E: Aktionsbereich (Doppelklick links)
- 11F: Aktionsbereich (Linksklick)
- 11G: Aktionsbereich (Rechtsklick)
- 12A-12G: LED-Elemente
- 13: erste Blickposition
- 13': zweite Blickposition
- 14, 15: Standard-Positionen zur Festlegung scrollbarer Bildschirmbereiche
- 16F: Aktionsflächen-Region auf dem Bildschirmbereich (für Aktionsbereich 11F)
- 20: System
- 21: Tabletcomputer
- 22: Eyetracking-Kamera
- 23: Halterung

## Patentansprüche

1. Verfahren zur Steuerung eines Computers, insbesondere Tabletcomputer (21), mittels einer Eyetracking-Kamera (22),
wobei der Computer eine grafische Benutzerschnittstelle aufweist, die durch Positionieren eines Zeigersymbols und/oder Auslösen einer Aktion bei positioniertem Zeigersymbol bedienbar ist,
wobei das Verfahren die folgenden Schritte aufweist:
a) Erfassen einer ersten Blickposition (13) in einem Bildschirmbereich (10) durch die Eyetracking-Kamera (22);
b) Erzeugen eines ersten Steuerbefehls, der den Computer dazu veranlasst, das Zeigersymbol an eine Zielposition zu steuern, die mit der ersten Blickposition (13) korrespondiert, und Senden des Steuerbefehls an den Computer;
c) Erfassen einer zweiten Blickposition (13') in einem Aktionsbereich (11A-G) durch die Eyetracking-Kamera (22), wobei der Aktionsbereich (11A-G) außerhalb des Bildschirmbereichs (11) liegt und einem Aktionstyp zugeordnet ist; und
d) Erzeugen eines zweiten Steuerbefehls, der den Computer dazu veranlasst, eine Aktion in Abhängigkeit von der Zielposition und/oder dem Aktionstyp auszuführen, und Senden des zweiten Steuerbefehls an den Computer.

2. Verfahren nach Anspruch 1,
wobei der Aktionsbereich (11A-G) einer von mehreren Aktionsbereichen (11A-G) ist, die oberhalb und/oder unterhalb und/oder seitlich von dem Bildschirmbereich (10) angeordnet sind.

3. Verfahren nach einem der vorherigen Ansprüche,
das ferner die folgenden Schritte umfasst:
- Erzeugen eines Steuerbefehls, der den Computer dazu veranlasst, das Zeigersymbol an die Zielposition zu steuern und/oder dort zu halten, insbesondere unabhängig von einer aktuellen Blickposition; und
- Senden des Steuerbefehls, insbesondere wiederholt, insbesondere, solange die aktuelle Blickposition außerhalb des Bildschirmbereichs (10) liegt.

4. Verfahren nach einem der vorhergehenden Ansprüche,
das ferner mindestens einen der folgenden Schritte umfasst, insbesondere zwischen Schritt b) und c):
- Erfassen einer Verweildauer einer Blickposition (13) an der Zielposition;
- Bestätigen der Blickposition (13), wenn die Verweildauer mindestens eine erste Zeitdauer, insbesondere 2000 ms, überschreitet; und
- Hervorheben der Zielposition in der grafischen Benutzerschnittstelle, insbesondere durch Anzeigen eines grafischen Elements und/oder Steuern des Zeigersymbols zur Ausführung einer Bestätigungsbewegung, wenn die Blickposition (13) bestätigt wurde.

5. Verfahren nach einem der vorhergehenden Ansprüche, insbesondere nach Anspruch 4,
wobei Schritt d) das Erfassen einer Blickposition (13') in einer Region des Aktionsbereichs (11A-G) für eine zweite Zeitdauer umfasst, die vorzugsweise kürzer als die erste Zeitdauer ist, insbesondere für mindestens 200ms.

6. Verfahren nach einem der vorhergehenden Ansprüche,
das ferner ein Ermitteln umfasst, ob der Aktionstyp für die Zielposition zulässig ist, und
wobei der zweite Steuerbefehl den Computer dazu veranlasst,
- den Aktionstyp an der Zielposition auszuführen, wenn der Aktionstyp für die Zielposition zulässig ist; und
- eine modifizierte Aktion auszuführen, ggf. in Abhängigkeit von der Zielposition, falls der Aktionstyp für die Zielposition nicht zulässig ist.

7. Verfahren nach einem der vorhergehenden Ansprüche, insbesondere nach Anspruch 4,
wobei der Aktionstyp insbesondere ein Maus-Linksklick, Maus-Rechtsklick oder Maus-Doppelklick ist, und
wobei, wenn die Bestätigung der Zielposition erkannt wurde, in Schritt d) als die Aktion der Aktionstyp für die bestätigte Zielposition ausgeführt wird.

8. Verfahren nach einem der vorhergehenden Ansprüche,
insbesondere nach Anspruch 4,
wobei der Aktionstyp ein Zoom ist, und
wobei, wenn die Bestätigung der Zielposition erkannt wurde, in Schritt d) als die Aktion der Zoom in einen Zoom-Bereich um die bestätigte Zielposition ausgeführt wird, wobei der Zoom-Bereich auf der gesamten Bildschirmfläche dargestellt wird, und von der Eyetracking-Kamera erfasste Blickpositionskoordinaten für den Zoom-Bereich umgerechnet werden.

9. Verfahren nach einem der vorhergehenden Ansprüche,
wobei der Aktionstyp ein Bildlauf ist, und
wobei in Schritt d) als die Aktion der Bildlauf für einen Fensterbereich ausgeführt, der durch eine vorgegebene Standard-Zielposition bestimmt wird.

10. Verfahren nach einem der vorhergehenden Ansprüche,
wobei in Schritt d) die Aktion unabhängig von der Zielposition ausgeführt wird.

11. Verfahren nach einem der vorhergehenden Ansprüche,
das ein Ansteuern einer Statusanzeige, insbesondere eines LED-Elements (12A-G), umfasst, die dem Aktionsbereich (11A-G) zugeordnet ist,
und/oder ein Ansteuern des Computers zur Hervorhebung einer Aktionsbereichs-Region (16F) auf dem Bildschirmbereich (10), die dem Aktionsbereich (11A-11G) zugeordnet ist, und zwar
- sobald eine Blickposition (13') in dem Aktionsbereich (11A-G) erfasst wurde; und/oder
- sobald der zweite Steuerbefehl an den Computer gesendet wurde.

12. Computerlesbares Speichermedium, welches Instruktionen enthält, die mindestens einen Prozessor dazu veranlassen, das Verfahren nach einem der vorangehenden Ansprüche zu implementieren, wenn die Instruktionen durch den mindestens einen Prozessor ausgeführt werden.

13. System (20), welches das Folgende aufweist:
- einen Computer mit Bildschirm, insbesondere Tabletcomputer (21);
- eine Eyetracking-Kamera (22); und
- eine Halterung (23), in und/oder an dem der Bildschirm und die Eyetracking-Kamera (22) angeordnet sind,
wobei das System dazu ausgebildet ist, das Verfahren nach einem der Ansprüche 1 bis 11 auszuführen.

14. System nach Anspruch 13,
wobei die Eyetracking-Kamera (22), insbesondere eine auf der Eyetracking-Kamera (22) implementierte Firmware, dazu ausgebildet ist, das Verfahren nach einem der Ansprüche 1 bis 11 auszuführen.

15. System nach Anspruch 13 oder 14,
wobei die Halterung (23) eine oder mehrere Statusanzeigen, insbesondere LED-Elemente (12A-G) aufweist, die jeweils einem Aktionsbereich zugeordnet sind.
